# EUROPÄISCHE PATENTSCHRIFT

(11) **EP 0 722 361 B1**
(45) Veröffentlichungstag und Bekanntmachung des Hinweises auf die Patenterteilung: **06.05.1998**
(21) Anmeldenummer: 94928811.2
(22) Anmeldetag: 24.09.1994
(51) Int. Cl.: B01J 20/32, G01N 30/48

(54) **EPOXY-DERIVATE VON POLYACRYLAMIDEN**
EPOXY DERIVATIVES OF POLYACRYLIC AMIDES
DERIVES EPOXY D'AMIDES POLYACRYLIQUES

(30) Priorität: 08.10.1993 DE 4334359
(43) Veröffentlichungstag der Anmeldung: 24.07.1996
(73) Patentinhaber: MERCK PATENT GmbH, 64293 Darmstadt (DE)
(72) Erfinder: MÜLLER, Egbert, D-64390 Erzhausen (DE)
(86) Internationale Anmeldenummer: EP9403196
(87) Internationale Veröffentlichungsnummer: WO9510354

(56) Entgegenhaltungen:
- EP-A- 0 282 770
- EP-A- 0 366 042
- FR-A- 2 631 849
- US-A- 4 756 834

## Beschreibung

Die Erfindung betrifft aktivierte Trägermaterialien, die epoxysubstituierte Poly(meth)acrylamide enthalten, sowie deren Verwendung.

Aktivierte Trägermaterialien sind wichtige Zwischenprodukte bei der Herstellung von Trägermaterialien für die Affinitätschromatographie und zur Immobilisierung von Enzymen. In polymeranalogen Umsetzungen können außerdem aus aktivierten Trägermaterialien Trennmaterialien für die Ionenaustausch-, für die hydrophobe Interaktions-, für die Gelpermeations- und für die Metallchelatchromatographie hergestellt werden.

Aktivierte Trägermaterialien, die sich von Epoxyderivaten von vernetzten Poly(meth)acrylaten herleiten, sind bekannt. Diese besitzen jedoch wegen ihrer rigiden Struktur Nachteile. In der deutschen Patentanmeldung DE 43 10 964 sind unvernetzte Pfropfpolymerisate auf der Grundlage von Epoxy-(meth)acrylaten beschrieben. Die vorliegende Erfindung stellt zusätzlich unvernetzte Pfropfpolymerisate auf der Grundlage von epoxy-substituierten Poly(meth)acrylamiden bereit.

Gegenstand der Erfindung sind aktivierte Trägermaterialien auf der Grundlage von hydroxylgruppenhaltigen Basisträgern, auf deren Oberflächen Polymere kovalent gebunden sind, dadurch gekennzeichnet, daß
a) der Basisträger aliphatische Hydroxylgruppen enthält,
b) die kovalent gebundenen Polymeren über eine endständige Monomereinheit an den Träger gebunden sind,
c) die Polymeren Monomereinheiten der Formel I enthalten,
d) die Monomereinheiten linear verknüpft sind, 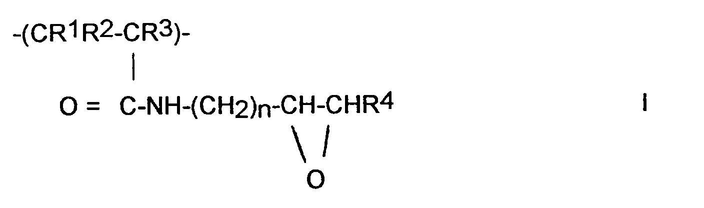 worin
   - R¹, R² und R³: unabhängig voneinander H oder CH₃,
   - R⁴: H oder Alkyl mit 1-5 C-Atomen
   und
   - n: eine ganze Zahl zwischen 1 und 5
   bedeuten.

Gegenstand der Erfindung sind Verfahren zur Herstellung von aktivierten Trägermaterialien auf Grundlage von hydroxylgruppenhaltigen Basisträgern, auf deren Oberflächen Polymere durch Pfropfpolymerisation kovalent gebunden werden, gekennzeichnet durch die Verfahrensschritte
a) Acroylisierung eines chlorhydrin-haltigen Alkylamins der Formel II, 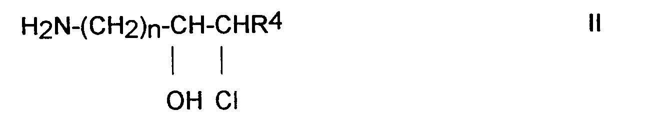 worin
   - R⁴: H oder Alkyl mit 1-5 C-Atomen
   und
   - n: eine ganze Zahl zwischen 1 und 5
   bedeuten;
b) Pfropfpolymerisation der Monomeren aus Schritt a) auf ein hydroxylgruppenhaltigen Basisträgerteilchen in Gegenwart von Cer(IV)-Ionen;
c) Umsetzung der Chlorhydrin-Restes zum Epoxid.

Gegenstand der Erfindung ist auch die Verwendung eines erfindungsgemäßen aktivierten Trägermaterials für die Herstellung von chromatographischen Trennmaterialien und für die Immobilisierung von Enzymen.

Gegenstand der Erfindung sind Verfahren zur Herstellung von chromatographischen Trennmaterialien, dadurch gekennzeichnet, daß Separationseffektoren an erfindungsgemäße aktivierte Trägermaterialien gebunden werden, sowie die nach diesen Verfahren hergestellten chromatographischen Trennmaterialien.

Gegenstand der Erfindung sind Verfahren zur Herstellung von immobilisierten Enzymen, dadurch gekennzeichnet, daß Enzyme an erfindungsgemäße aktivierte Trägermaterialien gebunden werden, sowie die nach diesen Verfahren hergestellten immobilisierten Enzyme.

Die chlorhydrin-haltigen Alkylamine der Formel II sind, soweit sie nicht kommerziell erhältlich sind, dem Fachmann nach gängigen Verfahren zugänglich. Die Beispiele beschreiben eine Verfahrensvariante.

Für die Acroylisierung der Alkylamine der Formel II geeignete Verfahrensvarianten sind dem Fachmann geläufig. Geeignet ist beispielsweise die Reaktion nach Schotten-Baumann und ihre Varianten. Als Acryl- oder Methacrylsäurederivat wird bevorzugt das Säurechlorid eingesetzt. Andere geeignete Derivate sind dem Fachmann geläufig, z.B. die Säureazide oder -anhydride. Es wird bevorzugterweise in Gegenwart eines Polymerisationsinhibitors gearbeitet.

Basisträger im Sinne der vorliegenden Erfindung sind Partikel, aber auch membran- oder fadenförmige, sowie netz- oder gewebeähnliche oder schwammähnliche Materialien, auf die Polymere aufgepfropft werden. Als Basisträger können allgemein übliche poröse oder unporöse Trägerteilchen eingesetzt werden, soweit sie primäre oder sekundäre aliphatische Hydroxylgruppen an ihrer Oberfläche aufweisen, oder in die nach an sich bekannten Verfahren aliphatische Hydroxylgruppen eingeführt werden können. Geeignet sind unter anderem Polysaccharide auf Agarose-Basis, Cellulose, Cellulosederivate und Polymere auf Dextran-Basis. Bevorzugt sind Polymere auf Polyvinylalkohol-Basis oder Copolymere aus (Meth)acrylatderivaten und Comonomeren mit aliphatischen Hydroxylgruppen. Insbesondere sind diolmodifizierte Kieselgele als Basisträger, sowie Mischpolymerisate auf Polyvinylbasis, die aliphatische Hydroxylgruppen enthalten, bevorzugt. Derartige Basisträger sind kommerziell erhältlich; z.B. Fractogel® TSK HW 65 (S) (Fa. E. Merck), ein poröses Mischpolymerisat auf Vinylbasis, das aliphatische Hydroxylgruppen enthält (1 mÄq OH/g), und LiChrospher® DIOL (Fa. E. Merck), ein diolsubstituiertes Kieselgel, ebenfalls mit aliphatischen Hydroxylgruppen.

Die Pfropfpolymerisation der substituierten Acrylamide auf den Basisträger wird mit Cer(IV)-Ionen gestartet, wie es von G.Mino und S.Kaizerman (1958) (J.Polymer Science **31**, 242-243) und von G.Mino et al. (1959) (J.Polymer Science **38**, 393-401) beschrieben wurde. Die Pfropfpolymerisation nach Mino und Kaizerman wird nach bekannten Verfahren in rein wäßriger, salpetersaurer Lösung ausgeführt. Deswegen kann diese Reaktion nur mit gut wasserlöslichen Monomeren ausgeführt werden. Es zeigte sich jedoch, daß die Umsetzung mit Cer(IV)- salzen auch möglich ist, wenn als Lösungsmittel eine Mischung aus Wasser und organischen Lösungsmitteln, die keine Hydroxylgruppen enthalten, benutzt wird. Besonders bevorzugt sind dabei Dioxan oder Tetrahydrofuran. Der Anteil des organischen Lösungsmittels im Reaktionsansatz beträgt bevorzugt 10-80 Volumen-%, besonders bevorzugt 20-50 Volumen-%.

Die Umsetzung Chlorhydrins zum Epoxid erfolgt nach Verfahren, die dem Fachmann geläufig sind.

Für die Wechselwirkung zwischen Analyt und chromatographischen Trennmaterial sind Separationseffektoren notwendig. Dem Fachmann ist eine Vielzahl von Separationseffektoren bekannt, die er entsprechend der chromatographischen Trennmethode auswählt: Beispiele für derartige Trennmethoden sind die Ionenaustauschchromatographie, die Gelpermeationschromatographie, die hydrophobe Interaktionschromatographie und die Affinitätschromatographie.

Als Separationseffektoren für die Ionenaustauschchromatographie sind ionische Gruppen wie beispielsweise quaternäre Ammoniumalkylgruppen und die SO₃⁻-Gruppe, sowie ionogene Gruppen, die unter bestimmten pH-Bedingungen Ionen bilden, bekannt. Zu der letzten Gruppe gehören beispielsweise die alkylierten Aminogruppen, sowie die Carboxyl- und die Phosphorsäuregruppe.

Für die hydrophobe Interaktionschromatographie sind ungeladene hydrophobe Separationseffektoren üblich, beispielsweise C₁-C₂₀-Alkyl, C₆-C₂₅-Aryl, C₇-C₂₅-Alkylaryl oder C₇-C₂₅-Arylalkyl, die auch einfach oder mehrfach mit Nitril oder C₁-C₅-Alkoxy derivatisiert sein können, wobei auch eine oder mehrere nicht benachbarte CH₂-Gruppen durch NH oder O oder auch eine oder mehrere CH-Gruppen durch N ersetzt sein können, oder Polyoxyethylen- oder Polyoxypropylenderivate [(CH₂)ₘ-O-]ₒ-R⁹, worin m 2 oder 3, o eine ganze Zahl zwischen 1 und 200 und R⁹ H oder C₁-C₅-Alkyl bedeuten. Bevorzugt werden besonders Reste mit mittlerer oder geringer Hydrophobizität.

Für die Affinitätschromatographie sind dem Fachmann sehr viele Affinitätsliganden bekannt, die jeweils mit dem Analyten eine strukturell gegebene Bindung eingehen, und die als Separationseffektoren geeignet sind, beispielsweise:

| Affinitätsligand | Analyt (Beispiel) |
|---|---|
| Protein A | Immunglobuline |
| Concanavalin A | Glycoproteine |
| Biotin | Avidin/Streptavidin |
| Avidin | Biotin |
| Streptavidin | Biotin |
| 5'-Adenosinmonophosphat | NAD-abhängige Oxidoreduktasen |
| 2',5'-Adenosindiphosphat | NADP-abhängige Oxidoreduktasen |
| Aminoacridin | RNA oder DNA |
| Boronsäure | Katecholamine |
| Boronsäure | glykosyliertes Hämoglobin |
| Iminodiessigsäure | Metalloproteine |
| "thiophile" Liganden | Immunglobuline |
| Cibachromblau | monoklonale Antikörper |

Die Separationseffektoren lassen sich durch Reaktion mit der aktiven Epoxid-Gruppe des aktivierten Trägermaterials einführen. Somit entsteht ein chromatographisches Trennmaterial für den durch den verwendeten Separationseffektor vorgegebenen Verwendungszweck. Geeignete Reaktionen sind grundsätzlich bekannt; dazu gehören beispielsweise:
a) die Reaktion mit schwefliger Säure oder ihren Salzen oder mit primären, sekundären oder tertiären Aminen, wobei Ionenaustauscher entstehen;
b) die Reaktion mit Alkoholen, Phenolen oder auch primären Aminen, wobei hydrophobe Trennmaterialien entstehen;
c) die Reaktion mit Iminodiessigsäure oder die Einführung thiophiler Liganden, oder anderer Affiniätsliganden wie Protein A, wobei Träger für die Affinitätschromatographie entstehen.

Auch ohne weitere Ausführungen wird davon ausgegangen, daß ein Fachmann die obige Beschreibung in weitesten Umfang nutzen kann. Die bevorzugten Ausführungsformen sind deswegen lediglich als beschreibende, keineswegs als in irgendeine Weise limitierende Offenbarung aufzufassen.

Die vollständige Offenbarung aller vor- und nachstehend aufgeführten Anmeldungen, Patente und Veröffentlichungen, sowie der korrespondierenden Anmeldung DE 43 34 359, eingereicht am 08.10.1993, sind durch Bezugnahme in diese Anmeldung eingeführt.

Die folgenden Beispiele dienen der Erläuterung der Erfindung und stellen keine Einschränkung der Erfindung dar.

### Beispiele

### Beispiel 1: Synthese eines Chlorhydrinderivates des Acrylamids

### Stufe 1:

60 g trockenes Phtalimidkalium und 120 g 1,3-Dichlorhydrin werden am Rückfluss innerhalb von 6 Stunden auf 200 °C erhitzt. Das Reaktionsprodukt wird anschließend mit Wasser ausgekocht. Anschließend wird das Wasser am Rotationsverdampfer unter vermindertem Druck entfernt; der Rückstand wird direkt für die nächste Synthesestufe verwendet.

### Stufe 2:

30 g des Reaktionsproduktes aus Stufe 1 werden in einer Lösung aus 50% Hydrazinhydrat und 50 % Ethanol 2 Stunden auf 60 °C erhitzt. Danach werden 100 ml 1 M Salzsäure zugesetzt und anschließend nochmals 2 Stunden auf 60 °C erhitzt. Das Phtalsäurehydrazid fällt aus und wird abfiltriert. Das Filtrat wird anschließend am Rotationsverdampfer unter vermindertem Druck eingeengt. Dann wird das Reaktionsprodukt in 100 ml einer 1 M Natronlauge aufgenommen. Diese Lösung wird für die nächste Synthesestufe verwendet.

### Stufe 3:

In die Lösung aus Stufe 2 werden unter Eiskühlung und Rühren 20 ml Acrylsäurechlorid eingetropft. Es wird anschließend noch 2 Stunden nachgerührt.

### Beispiel 2: Propfpolymerisation eines Chlorhydrinderivates des Acrylamids

Die Lösung aus Stufe 3 von Beispiel 1 wird zu 50 ml wasserfeuchtem Fractogel® TSK HW 65 (S) (Fa. E. Merck) zugegeben. Die Reaktionslösung wird mit 150 U/min gerührt. Danach wird die Starterlösung zugegeben (3 g Ammoniumcer(IV)nitrat + 3 g konzentrierte Salpetersäure in 25 ml Wasser). Die Polymerisation wird nach 3 Stunden abgebrochen und das Gel mit verdünnter Schwefelsäure und 1 M Natronlauge gewaschen.

### Beispiel 3: Polymeranaloge Umsetzung zum Oxiranderivat

Um das Polymere des Chlorhydrinderivates in das entsprechende Oxiranderivat zu überführen, wird das Gel hergestellt nach Beispiel 2 bei 60 °C in 1 M Natronlauge 5 Stunden gerührt. Nach dem Abkühlen wird das Gel neutral gewaschen.

Der Oxirangruppengehalt beträgt (nach Perchlorsäuretitration) 0,5 mmol/g Gel.

## Patentansprüche

1. Aktivierte Trägermaterialien auf der Grundlage von hydroxylgruppenhaltigen Basisträgem, auf deren Oberflächen Polymere kovalent gebunden sind, dadurch gekennzeichnet, daß
a) der Basisträger aliphatische Hydroxylgruppen enthält,
b) die kovalent gebundenen Polymeren über eine endständige Monomereinheit an den Träger gebunden sind,
c) die Polymeren Monomereinheiten der Formel I enthalten,
d) die Monomereinheiten linear verknüpft sind, 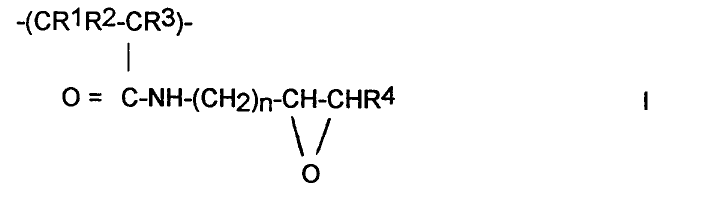 worin
R¹, R² und R³ unabhängig voneinander H oder CH₃,
R⁴ H oder Alkyl mit 1-5 C-Atomen
und
n eine ganze Zahl zwischen 1 und 5
bedeuten.

2. Verfahren zur Herstellung von aktivierten Trägermaterialien auf Grundlage von hydroxylgruppenhaltigen Basisträgern, auf deren Oberflächen Polymere durch Pfropfpolymerisation kovalent gebunden werden, gekennzeichnet durch die Verfahrensschritte
a) Acroylisierung eines chlorhydrin-haltigen Alkylamins der Formel II, 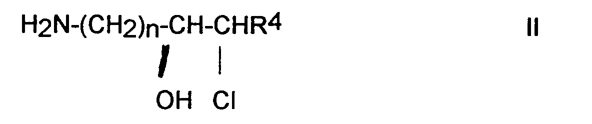 worin
R⁴ H oder Alkyl mit 1-5 C-Atomen
und
n eine ganze Zahl zwischen 1 und 5
bedeuten;
b) Pfropfpolymerisation der Monomeren aus Schritt a) auf ein hydroxylgruppenhaltigen Basisträgerteilchen in Gegenwart von Cer(IV)-Ionen;
c) Umsetzung der Chlorhydrin-Restes zum Epoxid.

3. Verwendung eines aktivierten Trägermaterials nach Anspruch 1 für die Herstellung von chromatographischen Trennmaterialien.

4. Verwendung eines aktivierten Trägermaterials nach Anspruch 1 für die Immobilisierung von Enzymen.

5. Verfahren zur Herstellung von chromatographischen Trennmaterialien, dadurch gekennzeichnet, daß Separationseffektoren an aktivierte Trägermaterialien nach Anspruch 1 gebunden werden.

6. Chromatographisches Trennmaterial herstellbar nach einem Verfahren nach Anspruch 5.

7. Verfahren zur Immobilisierung eines Enzyms dadurch gekennzeichnet, daß dieses an aktivierte Trägermaterialien nach Anspruch 1 gebunden wird.

8. Immobilisiertes Enzym herstellbar nach einem Verfahren nach Anspruch 7.

## Claims

1. Activated support materials based on hydroxyl-containing base supports on whose surfaces polymers are covalently bonded, characterized in that
a) the base support contains aliphatic hydroxyl groups,
b) the covalently bonded polymers are bonded to the support via a terminal monomer unit,
c) the polymers contain monomer units of the formula I,
d) the monomer units are linearly linked, 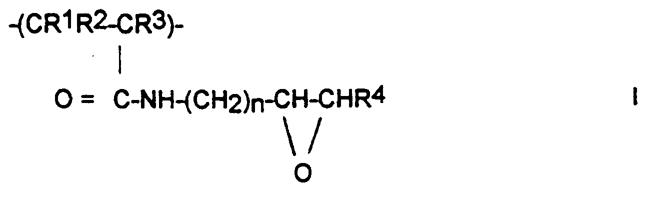 in which
R¹, R² and R³ independently of one another are H or CH₃,
R⁴ is H or alkyl having 1-5 carbon atoms and
n is an integer between 1 and 5.

2. Process for the preparation of activated support materials based on hydroxyl-containing base supports on whose surfaces polymers are covalently bonded by graft polymerization, characterized by the process steps of
a) acryloylation of a chlorohydrin-containing alkylamine of the formula II 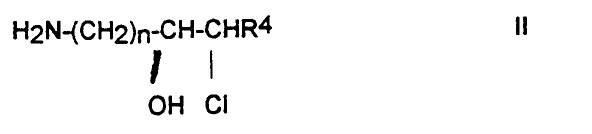 in which
R⁴ is H or alkyl having 1-5 carbon atoms and
n is an integer between 1 and 5;
b) graft polymerization of the monomers from step a) onto a hydroxyl-containing base support particle in the presence of cerium(IV) ions; and
c) reaction of the chlorohydrin radical to the epoxide.

3. Use of an activated support material according to Claim 1 for the preparation of chromatographic separating materials.

4. Use of an activated support material according to Claim 1 for the immobilization of enzymes.

5. Process for the preparation of chromatographic separating materials, characterized in that separation effectors are bonded to activated support materials according to Claim 1.

6. Chromatographic separating material, which can be prepared by a process according to Claim 5.

7. Process of immobilizing an enzyme, characterized in that it is bonded to activated support materials according to Claim 1.

8. Immobilized enzyme, which can be prepared by a process according to Claim 7.

## Revendications

1. Matières de support activées consistant en des supports de base à groupes hydroxy, à la surface desquels des polymères sont fixés par des liaisons covalentes, caractérisées en ce que :
a) le support de base porte des groupes hydroxy aliphatiques,
b) les polymères fixés par des liaisons covalentes sont reliés au support par l'intermédiaire d'un motif monomère en position terminale,
c) les polymères contiennent des motifs monomères de formule I,
d) les motifs monomères sont en liaison linéaire 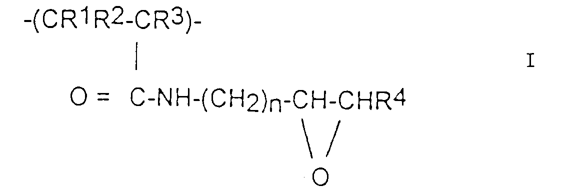 dans laquelle
R¹, R² et R³ représentent chacun, indépendamment les uns des autres, un atome d'hydrogène ou un groupe méthyle,
R⁴ représente un atome d'hydrogène ou un groupe alkyle en C₁-C₅ et
n est un nombre entier allant de 1 à 5.

2. Procédé de préparation de matières de support activées consistant en des supports de base à groupe hydroxy, à la surface desquels on a fixé des polymères par des liaisons covalents, par polymérisation par greffage, caractérisé en ce qu'il comprend les étapes suivantes :
a) l'acroylation d'une alkylamine à motif chlorhydrine, répondant à la formule II : 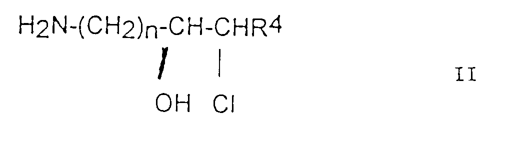 dans laquelle :
R⁴ représente un atome d'hydrogène ou un groupe alkyle en C₁-C₅ et
n est un nombre entier allant de 1 à 5 ;
b) la polymérisation par greffage des monomères de l'étape a) sur les particules d'un support de base à groupes hydroxy en présence d'ions cérium-IV ;
c) la conversion du motif chlorhydrine en époxyde.

3. Utilisation d'une matière de support activée selon la revendication 1 pour la préparation de matières séparatrices chromatographiques.

4. Utilisation d'une matière de support activée selon la revendication 1 pour l'immobilisation d'enzymes.

5. Procédé pour la préparation de matières séparatrices chromatographiques, caractérisé en ce que l'on fixe des corps séparateurs sur des matières de support activées selon la revendication 1.

6. Matière séparatrice chromatographique préparée par un procédé selon la revendication 5.

7. Procédé pour immobiliser une enzyme, caractérisé en ce qu'on la fixe sur une matière de support activée selon la revendication 1.

8. Enzyme immobilisée, obtenue par un procédé selon la revendication 7.
